**Europäisches Patentamt**

**European Patent Office**

**Office européen des brevets**

(19)

(11) Veröffentlichungsnummer: **0 204 165**
**B1**

(12) # EUROPÄISCHE PATENTSCHRIFT

(45) Veröffentlichungstag der Patentschrift:
**28.12.88**

(51) Int. Cl.⁴: **G 01 F 1/06**

(21) Anmeldenummer: **86106157.0**

(22) Anmeldetag: **06.05.86**

(54) **Durchflussmengenmesser mit Laufrad.**

(30) Priorität: **09.05.85 FR 8507001**

(43) Veröffentlichungstag der Anmeldung:
**10.12.86 Patentblatt 86/50**

(45) Bekanntmachung des Hinweises auf die Patenterteilung:
**28.12.88 Patentblatt 88/52**

(84) Benannte Vertragsstaaten:
**CH DE GB IT LI SE**

(56) Entgegenhaltungen:
**CH-A- 485 200**
**FR-A- 582 920**
**US-A- 3 329 021**

(73) Patentinhaber: **NEIMAN, 39 Avenue Marceau,
F-92400 Courbevoie (FR)**

(72) Erfinder: **Rousseau, Alain, 7, rue Nicolas Houel,
F-75005 Paris (FR)**

(74) Vertreter: **Patentanwaltsbüro Cohausz & Florack,
Schumannstrasse 97, D-4000 Düsseldorf 1 (DE)**

ACTORUM AG

## Beschreibung

Die Erfindung bezieht sich auf einen Durchflussmengenmesser mit Laufrad, ausgeführt mit einem Gehäuse, welches umfasst eine Kammer mit im wesentlichen kreisförmigem Querschnitt, in die eine Eintrittsöffnung im wesentlichen tangential dazu sowie eine Austrittsöffnung münden, ein mit Schaufeln versehenes Laufrad, das sich in der genannten Kammer um deren Achse unter der Wirkung des Strömungsmittels dreht, das die Kammer von der Eintritts- zur Austrittsöffnung durchfliesst, und Mittel zum Messen der Drehgeschwindigkeit des Laufrads, wobei die Wand der genannten Kammer neben den Enden der Laufradschaufeln mit Aussparungen versehen ist, die im wesentlichen parallel zur Achse der Kammer verlaufen und eine Durchwirbelung des Strömungsmittels durch die Kammer erzeugen.

Ein solcher Durchflussmengenmesser ist durch das U.S.-amerikanische Patent Nr. 3 329 021 bekannt.

Der Einfluss des durch die genannten Aussparungen am Durchfluss erzeugten Wirbels erweist sich jedoch zum Erhalt der unter bestimmten Betriebsbedingungen notwendigen Präzision als unzulänglich.

Ziel der Erfindung ist es, diesem Nachteil abzuhelfen, indem beim Durchfluss schon beim Eintritt in die Kammer ein Wirbel erzeugt wird.

Zu diesem Zweck ist der erfindungsgemässe Durchflussmengenmesser dadurch gekennzeichnet, dass die genannte Eintrittröffnung in eine der Seitenwände einer der genannten Aussparungen der Kammer so mündet, dass mindestens ein Teil des Durchflusses auf die gegenüberliegende Seitenwand der genannten Aussparung trifft.

Die Erfindung wird besser verständlich beim Lesen der folgenden Beschreibung unter Bezugnahme auf die beigeheftete Zeichnung, in der:

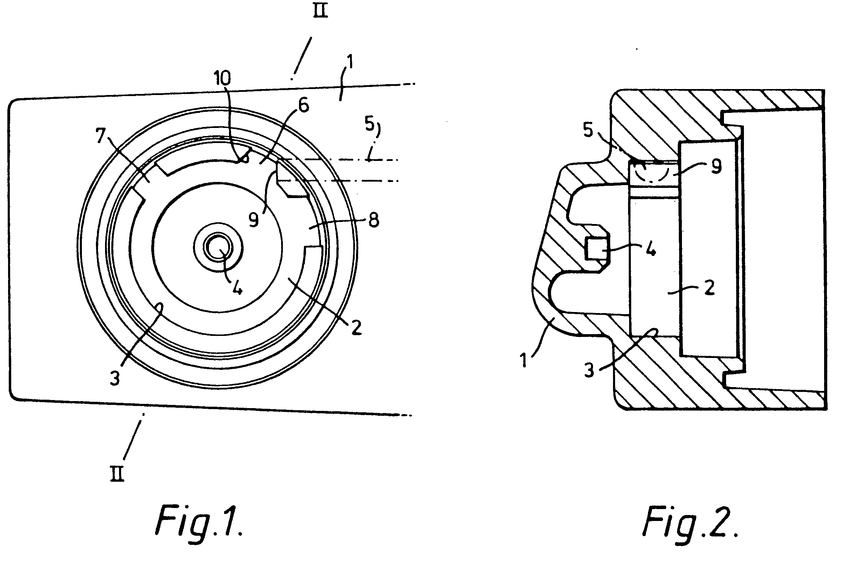

Figur 1 eine Draufsicht der Kammer eines Durchflussmengenmessers nach einem Ausführungsbeispiel der Erfindung ist, und

Figur 2 ist eine Schnittansicht entlang der Linie II-II in Fig. 1.

Der Durchflussmengenmesser umfasst ein Gehäuse 1 mit einer Kammer 2 von im wesentlichen kreisförmigem Querschnitt und einer Seitenwand 3, innerhalb der sich um ein Lager 4 ein Laufrad (nicht dargestellt) dreht, dessen Schaufelenden sich nahe der Wand 3 der Kammer 2 vorbeibewegen.

Eine Eintrittsöffnung 5 für das Strömungsmittel mündet in die Kammer 2 im wesentlichen tangential zur Wand 3, und eine Austrittsöffnung (nicht dargestellt) ermöglicht den Abfluss des Strömungsmittels, nachdem dieses in der Kammer 2 einen im wesentlichen kreisförmigen Weg zurückgelegt hat. Um am durchfliessenden Strömungsmittel einen Wirbel zu erzeugen, ist die Wand 2 mit axialen Aussparungen 6, 7 und 8 versehen.

Erfindungsgemäss mündet die Eintrittsöffnung 5, bei der es sich um eine Venturi-Düse handeln kann, in eine Wand 9 von einer der Aussparungen 6, und zwar so, dass der Strahl des Strömungsmittels auf die gegenüberliegende Wand 10 der Aussparung 6 trifft. Auf diese Weise wird im Durchfluss schon beim Eintritt des Strömungsmittels in die Kammer 2 ein starker Wirbel erzeugt.

Der Durchflussmengenmesser umfasst Mittel (nicht dargestellt) zum Messen der Drehgeschwindigkeit des Laufrads, die an den Durchfluss gebunden ist.

## Patentanspruch

Durchflussmengenmesser mit Laufrad, umfassend ein Gehäuse mit einer Kammer (2) von im wesentlichen kreisförmigem Querschnitt, in die eine Eintrittsöffnung (5) im wesentlichen tangential dazu sowie eine Austrittsöffnung münden, einem Laufrad mit Schaufeln, das sich in der genannten Kammer (2) um deren Achse unter der Wirkung des die Kammer (2) von der Eintrittsöffnung (5) zur Austrittsöffnung durchfliessenden Strömungsmittels dreht, und Mitteln zum Messen der Drehgeschwindigkeit des Laufrads, wobei die Wand (3) der genannten Kammer (2) neben den Enden der Laufradschaufeln mit Aussparungen (6) versehen ist, die im wesentlichen parallel zur Achse der Kammer (2) verlaufen und das die Kammer (2) durchfliessende Strömungsmittel durchwirbeln, dadurch gekennzeichnet, dass die genannte Eintrittsöffnung (5) in eine der Seitenwände (9) von einer der genannten Aussparungen (6) der Kammer (2) so mündet, dass mindestens ein Teil des Durchflusses auf die gegenüberliegende Seitenwand (10) der genannten Aussparung trifft.

## Claim

Flow meter with rotor, comprising a housing having a chamber (2) of substantially circular cross-section, into which an inlet opening (5) leads substantially tangentially and which also an outlet opening leaves, comprising also a rotor having blades which revolves in the aforementioned chamber (2) about the axis of the chamber under the action of the fluid flowing through the chamber (2) from the inlet opening (5) to the outlet opening, and comprising means for measuring the rotational speed of the rotor, the wall (3) of the aforementioned chamber (2) being furnished, adjacent to the ends of the rotor blades, with recesses (6), which extend substantially parallel to the axis of the chamber (2) and create turbulence in the fluid flowing through the chamber (2), characterized in that the said inlet opening (5) leads into one of the lateral walls (9) of one of the aforementioned recesses (6) of the chamber 62) in such a manner that at least a part of the flow strikes against the opposite lateral wall (10) of the aforementioned recess.

## Revendications

Débitmètre à turbine pour fluides, comprenant un boîtier avec une chambre (2) à section sensiblement circulaire dans laquelle débouchent un orifice d'admission (5) sensiblement tangentiel à ladite chambre et un orifice d'échappement, une turbine avec des palettes pivotant dans ladite chambre (2) autour de son axe sous l'action du fluide traversant la chambre (2) depuis l'orifice d'admission (15) jusqu'à l'orifice d'échappement, et des moyens de mesure de la vitesse de rotation de la turbine, la paroi (3) de ladite chambre (2) adjacente aux extrémités des palettes de la turbine étant munie d'évidements (6) sensiblement parallèles à l'axe de la chambre et créant une turbulence dans l'écoulement de fluide à travers la chambre (2), caractérisé par le fait que ledit orifice d'admission (5) débouche dans une des parois latérales (9) de l'un desdits évidements (6) de la chambre (2) de manière qu'au moins une partie de l'écoulement fluide vienne frapper la paroi latérale opposée (10) dudit évidement.

Fig.2.

Fig.1.